# FASCICULE DE BREVET EUROPEEN

(11) **EP 3 419 749 B1**
(45) Date de publication et mention de la délivrance du brevet: **28.10.2020**
(21) Numéro de dépôt: 17705640.5
(22) Date de dépôt: 17.02.2017
(51) Int. Cl.: B01J 14/00, B01J 19/12, C01B 3/04, C25B 1/00, C01B 13/02, C25B 1/04, C25B 11/14, C25B 9/08, C25B 9/10, C25B 1/06

(54) **DISPOSITIF PHOTO-CATALYTIQUE POUR LA PRODUCTION D'HYDROGÈNE GAZEUX**
FOTOKATALYTISCHE VORRICHTUNG ZUR HERSTELLUNG VON GASFÖRMIGEM WASSERSTOFF
PHOTOCATALYTIC DEVICE FOR THE PRODUCTION OF GASEOUS HYDROGEN

(30) Priorité: 23.02.2016 BE 201605125
(43) Date de publication de la demande: 02.01.2019
(73) Titulaire: H2Win S.A., 1400 Nivelles (BE)
(72) Inventeur: LORGE, Philippe, 1400 Nivelles (BE); REMACLE, Claire, 4600 Visé (BE); GERIN, Stéphanie, 4530 Villers le Bouillet (BE); JOB, Nathalie, 4051 Vaux-sous-Chèvremont (BE); FRANCK, Fabrice, 4000 Liège (BE); CALDARELLA, Giuseppe, 4430 Ans (BE); GHYSELS, Bart, 1020 Laeken (BE); GODAUX, Damien, 4100 Seraing (BE); CARDOL, Pierre, 4800 Verviers (BE)
(74) Mandataire: ABYOO
(86) Numéro de dépôt international: PCT/EP2017/053653
(87) Numéro de publication internationale: WO 2017/144368

(56) Documents cités:
- WO-A1-2015/036496
- WO-A2-2005/007932
- DE-A1-102009 036 180
- HERRERO ET AL: "Artificial systems related to light driven electron transfer processes in PSII", COORDINATION CHEMISTRY REVIEWS, ELSEVIER SCIENCE, AMSTERDAM, NL, vol. 252, no. 3-4, 14 janvier 2008 (2008-01-14), pages 456-468, XP022420399, ISSN: 0010-8545, DOI: 10.1016/J.CCR.2007.09.002

## Description

La présente invention se rapporte à un dispositif photo-catalytique de dissociation d'une phase aqueuse pour produire de l'hydrogène gazeux, ledit dispositif étant agencé de sorte qu'au moins un système photo-catalytique en contact avec ladite phase aqueuse puisse être irradié par une source lumineuse pour produire, via une réaction d'oxydation de ladite phase aqueuse, au niveau d'un moyen de capture d'électrons, de l'oxygène gazeux, des électrons et des protons, ledit dispositif comprenant :
- une première zone comprenant ladite phase aqueuse, et
- un moyen de réduction desdits protons agencé pour réaliser une réaction de réduction desdits protons par lesdits électrons afin de produire de l'hydrogène gazeux, ledit moyen de réduction de protons étant une interface échangeuse de protons présentant une face frontale orientée vers ledit moyen de capture d'électrons et une face dorsale, ladite face dorsale de ladite interface échangeuse de protons comprenant au moins un catalyseur et/ou au moins un système catalytique.

Le document WO2005/007932 décrit un dispositif photo-catalytique de dissociation d'une phase aqueuse pour produire de l'hydrogène gazeux.

Par les termes « système photo-catalytique », on entend, au sens de la présente invention, un système comprenant au moins une photo-enzyme et/ou ses coenzymes ainsi que tout photo-catalyseur capable d'opérer une réaction d'oxydation d'une phase aqueuse.

Par les termes « phase aqueuse », on entend, au sens de la présente invention, une phase contenant uniquement de l'eau ou une phase contenant de l'eau et au moins un additif, par exemple un électrolyte (tampon) ou un médiateur de transport d'électrons ou un accepteur d'électrons.

Le développement de tels dispositifs a pour objectif premier de pouvoir fournir une énergie verte et renouvelable au départ d'une source lumineuse (par exemple au départ de la lumière solaire), ceci en essayant de se dispenser au moins en partie de tout autre apport énergétique permettant le fonctionnement du dispositif photo-catalytique.

Un tel dispositif photo-catalytique est connu de l'état de la technique et est utilisé pour obtenir, au départ d'une énergie lumineuse et d'eau, de l'hydrogène sous forme de gaz (H_{2 gaz}). Plus particulièrement, un tel dispositif permet l'obtention d'hydrogène gazeux par réalisation (1) d'une réaction d'oxydation photo-catalytique (par exemple photo-enzymatique) d'une solution aqueuse donnant lieu à une libération d'oxygène gazeux (O_{2 gaz}), d'électrons (e⁻) et de protons (H⁺) et (2) d'une réaction de réduction desdits protons (H⁺) par lesdits électrons (e⁻), cette réaction de réduction produisant de l'hydrogène sous forme de gaz (H_{2 gaz}).

Dans une telle cellule ou dispositif photo-catalytique et plus particulièrement dans une cellule ou dispositif photo-enzymatique, l'oxydation de la solution aqueuse s'effectue typiquement au niveau d'une photo-anode comprenant une interface électrochimique (par exemple en carbone) et un système photo-catalytique (en particulier des photo-enzymes), lequel, sous illumination, est activé et dissocie les molécules d'eau. Typiquement, ce système photo-catalytique, par exemple des photo-enzymes, constitue le revêtement de l'anode.

A cette fin, dans une cellule photo-enzymatique (étant un type particulier de cellule photo-catalytique), peut être utilisé en tant que photo-enzyme, le PSII qui est le complexe moléculaire enzymatique naturel, siège de l'hydrolyse (photolyse ou oxydation) de l'eau dans les chloroplastes des cellules végétales lors de la photosynthèse. Durant la photosynthèse, et dans les dispositifs photo-enzymatiques de dissociation de l'eau, est opérée une dissociation de l'eau selon la première réaction suivante : 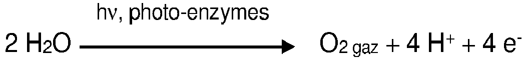 où hv correspond à la lumière, H₂O est l'eau, H⁺ représente un proton et e⁻ représente un électron, les photo-enzymes pouvant être par exemple le complexe enzymatique PSII.

Selon cette première réaction, les photo-enzymes, comme par exemple le complexe moléculaire enzymatique PSII, permettent donc de produire, sous l'effet de la lumière et par dissociation de l'eau, de l'oxygène (O_{2 gaz}), des protons libres (H⁺) et des électrons (e⁻). Eventuellement, les électrons vont être pris en charge, dans la solution aqueuse, par un médiateur (accepteur) d'électrons (par exemple du 2,5-dichloro-1,4-benzoquinone ou DCBQ) qui va leur faire gagner l'anode. Dès lors que l'anode est connectée électriquement à la cathode composée d'une interface électrochimique (par exemple en platine et/ou comprenant des enzymes de type hydrogénase), les électrons vont gagner cette dernière. De leur côté, les protons vont gagner, par diffusion au travers de la phase aqueuse, la cathode (c'est-à-dire un moyen de réduction des protons) également. C'est au niveau de cette dernière que, finalement, les électrons et les protons obtenus par dissociation de l'eau par action des photo-enzymes, vont former de l'hydrogène gazeux au travers d'une réaction de réduction des protons selon la deuxième réaction suivante :

2 H⁺ + 2 e⁻ → H_{2 gaz}

De l'hydrogène gazeux (H_{2 gaz}) est donc finalement obtenu et peut être extrait du dispositif photo-enzymatique (photo-catalytique) en vue par exemple de son stockage.

De tels dispositifs photo-enzymatiques, étant un type particulier de dispositifs photo-catalytiques, sont connus de l'état de la technique et sont généralement composés de deux électrodes, par exemple sous forme de grilles en carbone en platine et/ou en carbone baignant dans une même solution aqueuse et reliées entre elles, par exemple par l'intermédiaire d'un potentiostat. Avec les dispositifs photo-enzymatiques de dissociation de l'eau actuellement connus, ce potentiostat (ou tout autre appareillage adéquat) doit impérativement fournir un potentiel énergétique additionnel non négligeable (dénommé « over-potential » ou encore BIAS) qui doit s'ajouter au potentiel énergétique initial des électrons au niveau de l'anode. Il apparait en effet, qu'avec les dispositifs photo-enzymatiques actuellement connus de l'état de la technique où les électrodes sont par exemple sous la forme de grilles en carbone, un tel potentiel énergétique additionnel (par exemple imprimé sous la forme d'un potentiel électrique) est indispensablement requis pour permettre une production d'hydrogène gazeux. Plus particulièrement, un tel potentiel énergétique additionnel est indispensable pour permettre un transfert des électrons produits au niveau de l'anode jusqu'à la cathode (moyen de réduction des protons) et donc pour permettre, au niveau de cette dernière, la réduction desdits protons H⁺ en hydrogène gazeux, ceci par lesdits électrons e⁻.

Il s'avère en effet que les électrons issus de l'eau sont confrontés à une cascade de transmission et à diverses interfaces à franchir avant de pouvoir d'abord gagner l'anode puis ensuite la cathode, chacune de ces transmissions et chacune de ces interfaces consommant une certaine énergie des électrons.

Par conséquent, avec les dispositifs actuels, il est nécessaire de fournir un potentiel énergétique additionnel non négligeable (de l'ordre du volt) pour que les électrons puissent disposer d'une énergie suffisante afin de surmonter toutes ces transmissions et toutes ces interfaces. Il convient donc de fournir indispensablement un potentiel énergétique additionnel non négligeable, par exemple par l'intermédiaire d'un potentiostat, de telle sorte que les électrons puissent disposer de suffisamment d'énergie pour gagner la cathode et y assurer la réduction des protons en hydrogène gazeux. Or, ceci est contraire à l'objectif premier de ce type de dispositif photo-enzymatique (dispositif photo-catalytique) qui est justement de produire de l'hydrogène gazeux uniquement au départ d'une source d'énergie lumineuse sans avoir à recourir à d'autres sources énergétiques ou en ne recourant à ces dernières que dans une moindre mesure. En effet, puisque l'énergie mise en œuvre dans le dispositif et le rendement énergétique du dispositif doivent être mesurés de façon globale, il apparait que, pour les dispositifs photo-enzymatiques actuels, cette énergie globale et ce rendement énergétique résultent toujours de la somme de l'énergie lumineuse mise en œuvre via la source lumineuse et de l'énergie électrique mise en œuvre par exemple via le potentiostat.

Notons qu'il est également connu de l'état de la technique des dispositifs photo-catalytiques utilisant des photo-catalyseurs autres que des pho-enzymes.

De tout ceci, il ressort donc que, malheureusement, pour les dispositifs photo-catalytiques, et en particulier pour les dispositifs photo-enzymatiques actuels, il est indispensable de fournir un potentiel énergétique additionnel (ou over-potential) non négligeable de l'ordre du volt afin de pourvoir produire de l'hydrogène gazeux et donc qu'une source énergétique additionnelle non négligeable est nécessaire. Il en résulte que le bilan énergétique global et le rendement énergétique global ne sont pas optimaux puisque deux sources énergétiques différentes doivent être associées pour obtenir de l'hydrogène gazeux, l'une lumineuse et l'autre électrique.

Il existe donc un réel besoin de pouvoir procurer un dispositif photo-catalytique pour la production d'hydrogène gazeux qui puisse se dispenser de toute source énergétique additionnelle (par exemple d'une source énergétique électrique additionnelle) ou qui puisse du moins réduire considérablement le potentiel énergétique additionnel (ou over-potential) à apporter au dispositif.

Pour résoudre ce problème, il est prévu suivant l'invention, un dispositif photo-catalytique de dissociation d'une phase aqueuse pour produire de l'hydrogène gazeux tel qu'indiqué au début, ledit dispositif étant caractérisé en ce que ladite interface échangeuse de protons constitue une séparation entre ladite première zone comprenant ladite phase aqueuse et une deuxième zone non aqueuse, ladite séparation étant une séparation ne laissant pas passer ladite phase aqueuse mais laissant passer les protons vers ladite deuxième zone non aqueuse .

Par les termes « catalyseur » ou « système catalytique », on entend, au sens de la présente invention, tout agent ou tout ensemble d'agents permettant de catalyser une réaction d'oxydation et/ou de réduction.

Par les termes « seule ladite face dorsale de ladite interface échangeuse de protons comprenant au moins un catalyseur et/ou au moins un système catalytique », on entend, au sens de la présente invention, qu'uniquement la face dorsale de l'interface échangeuse de protons est dopée avec au moins un catalyseur et/ou avec au moins un système catalytique.

Selon l'invention, l'interface (comme par exemple une membrane) échangeuse de protons, dénommée également membrane à électrolyte polymère (PEM), est une interface permettant la conduction protonique tout en ne laissant pas passer les gaz tels que le dioxygène ou le dihydrogène.

De façon surprenante, il a été montré, dans le cadre de la présente invention, qu'un tel dispositif, dont le moyen de capture de protons est une interface échangeuse de protons présentant une face frontale orientée vers ledit moyen de capture d'électrons et une face dorsale comprenant elle seule au moins un catalyseur et/ou au moins un système catalytique, permet de minimiser considérablement voire de se dispenser de tout apport d'un potentiel énergétique additionnel (over-potential). En effet, il a été déterminé que le dispositif suivant l'invention permet de réduire d'un tiers au moins le potentiel énergétique additionnel (over-potential) à fournir au système lors de l'utilisation d'un dispositif selon l'invention.

Plus particulièrement, il a été déterminé, dans le cadre de la présente invention, qu'un potentiel énergétique additionnel moindre doit être appliqué lorsque les protons gagnant l'interface échangeuse de protons sont pris en charge au niveau de la face frontale de cette dernière puis transportés au travers de cette interface échangeuse de protons de telle façon à gagner sa face dorsale où les protons sont directement réduits dès lors que seule la face dorsale de cette interface échangeuse de protons comprend au moins un catalyseur et/ou au moins un système catalytique.

De préférence, selon l'invention, ledit système photo-catalytique est un système comprenant au moins une photo-enzyme et/ou ses coenzymes ou un système comprenant tout photo-catalyseur capable d'opérer une réaction d'oxydation d'une phase aqueuse.

Avantageusement, selon l'invention, ledit au moins un système photo-catalytique est au moins une photo-enzyme étant le complexe enzymatique PSII, de préférence le complexe enzymatique PSII isolé du complexe enzymatique PSI et/ou d'autres protéines thylakoïdiennes. Le complexe enzymatique PSII peut être extrait de membranes thylakoïdiennes d'organismes photosynthétiques puis peut être éventuellement purifié et/ou isolé du complexe enzymatique PSI ou d'autres complexes enzymatiques.

Eventuellement, le complexe PSII est un complexe de synthèse résultant d'une étape de fabrication synthétique du complexe enzymatique PSII.

De préférence, selon l'invention, ledit au moins un système photo-catalytique en contact avec ladite phase aqueuse constitue le revêtement d'une première électrode, en particulier le revêtement d'une anode. Toutefois, il est prévu, dans le cadre de la présente invention, que le système photo-catalytique, par exemple des photo-enzymes, puisse simplement se trouver en contact avec la phase aqueuse ou sous une forme leur permettant de se maintenir dans une zone particulière de la phase aqueuse.

Préférentiellement, selon l'invention, ledit moyen de capture d'électrons comprend ou non au moins un catalyseur et/ou au moins un système catalytique autre que ledit système photocatalytique.

Avantageusement, selon l'invention, ledit au moins un catalyseur et/ou ledit au moins un système catalytique autre que ledit système photocatalytique comprend des enzymes de type hydrogénase et/ou des particules de platine. Il a été déterminé que, outre un coût bien moindre par rapport au platine, des enzymes de type hydrogénase permettent de prendre en charge un nombre plus élevé d'électrons par unité de temps (par seconde) mais aussi de réduire quelque peu le potentiel énergétique requis par le dispositif afin de produire de l'hydrogène gazeux. Les enzynes de type hydrogénase mentionnées plus haut peuvent être éventuellement obtenues par voie de synthèse plutôt que d'être extraites au départ d'organismes naturels.

De préférence, selon l'invention, ledit moyen de capture d'électrons est une interface échangeuse de protons ou une grille en carbone.

Par les termes « deuxième zone non aqueuse », on entend par exemple, au sens de la présente invention, une zone comprenant une phase solide ou une phase liquide non aqueuse ou une zone sans phase liquide.

De préférence, selon l'invention, ladite séparation est une séparation ne laissant pas passer ladite phase aqueuse ni les gaz (en particulier l'O₂) tout en laissant passer les protons. Une telle séparation suivant l'invention permet, dans un mode de réalisation, d'assurer que la réaction de réduction ne s'effectue qu'au niveau d'une zone non aqueuse. Dans ce cas, la séparation (l'interface par exemple sous forme d'une membrane) présentant une face frontale et une face dorsale, il est prévu, selon l'invention, que la face frontale soit en contact avec la phase aqueuse ou en contact direct avec l'anode et donc orientée du côté de la première zone aqueuse tandis qu'il est prévu que la face dorsale dopée avec un catalyseur (par exemple avec du carbone et/ou du platine) soit orientée du côté de la deuxième zone non aqueuse, la réaction de réduction des protons par les électrons afin d'obtenir de l'hydrogène gazeux s'effectuant uniquement au niveau de la face dorsale de l'interface (membrane) et donc uniquement du côté de la zone non aqueuse. Ceci est possible dès lors que, comme indiqué plus haut, la séparation (membrane) ne laisse pas passer la phase aqueuse mais laisse passer les protons vers la deuxième zone non aqueuse, les protons étant réduits uniquement au niveau de la face dorsale de cette séparation (interface) et donc au niveau de la deuxième zone non aqueuse. Dans le cadre de la présente invention, il a été déterminé qu'une réduction des protons au niveau d'une zone non aqueuse permet d'optimiser l'intensité (la grandeur / importance du courant) pour un même potentiel énergétique appliqué au système.

Avantageusement, selon le dispositif photo-catalytique de dissociation d'une phase aqueuse pour produire de l'hydrogène gazeux suivant l'invention, un moyen de contact est présent au niveau dudit moyen de capture d'électrons et/ou au niveau dudit moyen de réduction des protons. Par exemple, un tissu en carbone est prévu pour assurer un contact électrique optimal entre ledit moyen de capture d'électrons et ledit moyen de réduction des protons, ceci par l'intermédiaire par exemple d'un potentiostat.

De préférence, selon l'invention, ladite phase aqueuse est une phase contenant uniquement de l'eau ou une phase contenant de l'eau et au moins un additif, par exemple un électrolyte ou un médiateur de transport d'électrons ou un accepteur d'électrons.

Avantageusement, selon l'invention, ladite phase aqueuse comprend en outre un médiateur de transport d'électrons ou un accepteur d'électrons. A titre d'exemple, ledit médiateur de transport d'électrons ou ledit accepteur d'électrons peut être un dérivé de la quinone, de préférence la 2,6-diméthylebenzoquinone, la 2,6-dichloro-p-benzoquinone ou la 1,4-benzoquinone. Eventuellement, ledit médiateur de transport d'électrons ou ledit accepteur d'électrons est sous forme de nanotubes de carbone (Carbon Nano-Tube) ou de ferricyanure.

De préférence, selon l'invention, ladite phase aqueuse présente une valeur de pH comprise entre 4 et 8, de préférence une valeur de pH comprise entre 6 et 7.

Avantageusement, le dispositif photo-catalytique de dissociation d'une phase aqueuse pour produire de l'hydrogène gazeux suivant l'invention comprend en outre un dispositif additionnel de récupération et d'évacuation de gaz. Par exemple, ce dispositif peut se présenter sous la forme d'un dispositif assurant un flux azote au niveau de ladite deuxième zone non aqueuse, ceci afin de récupérer et d'évacuer les gaz présents dans ladite deuxième zone non aqueuse, notamment récupérer et évacuer l'hydrogène gazeux produit par réduction des protons au niveau de cette deuxième zone non aqueuse.

Avantageusement, le dispositif photo-catalytique de dissociation d'une phase aqueuse pour produire de l'hydrogène gazeux suivant l'invention comprend en outre un dispositif additionnel de détection d'hydrogène gazeux.

Avantageusement, le dispositif photo-catalytique de dissociation d'une phase aqueuse pour produire de l'hydrogène gazeux suivant l'invention comprend en outre un potentiostat.

De préférence, selon l'invention, ladite source de lumière se trouve dans la phase aqueuse. En effet, plutôt que d'avoir une source de lumière externe au dispositif photo-catalytique, celle-ci peut être immergée dans la phase aqueuse. Dès lors, les photons n'ont plus à traverser une paroi frontale du dispositif photo-catalytique, ce qui contribue à optimiser le rendement de ce dernier. Par exemple, à cette fin pourraient être utilisées des fibres optiques.

Avantageusement, ledit médiateur de transport d'électrons ou ledit accepteur d'électrons est présent dans la phase aqueuse à une concentration comprise entre 1picoM et 1M. De préférence ledit médiateur de transport d'électrons ou ledit accepteur d'électrons est présent dans la phase aqueuse à une concentration comprise entre 10µM et 1mM. De préférence, pour les organismes photosynthétiques, le PSII est présent dans la phase aqueuse à une concentration comprise entre 1µg Chl/cm² et 1g Chl/cm², de préférence entre 20µg Chl/cm² et 200µg Chl/cm². Au sens de l'invention, les concentrations en PSII sont traditionnellement exprimées par rapport à la concentration en chlorophylle totale (Chl). Par concentration en chlorophylle totale, il faut entendre au sens de l'invention la concentration en chlorophylles A et B. Lorsqu'il s'agit d'organismes photosynthétiques ne comportant pas de chlorophylle, la présence de PSII dans la phase aqueuse est quantifiée, selon l'invention, par un dosage de la phéophytine.

D'autres formes de réalisation du dispositif suivant l'invention sont indiquées dans les revendications annexées.

L'invention a aussi pour objet un procédé de production d'hydrogène gazeux avec un dispositif photo-catalytique selon l'invention, ledit procédé comprenant les étapes suivantes :
- une irradiation d'au moins un système photo-catalytique en contact avec une phase aqueuse présente dans une première zone, par une source lumineuse, pour produire, via une réaction d'oxydation de ladite phase aqueuse au niveau d'un moyen de capture d'électrons, de l'oxygène gazeux, des électrons et des protons, et
- une capture desdits protons, au niveau d'une interface échangeuse de protons présentant une face frontale orientée vers ledit moyen de capture d'électrons et présentant une face dorsale comprenant au moins un catalyseur et/ou au moins un système catalytique, afin que lesdits protons soient réduits en hydrogène gazeux via une réaction de réduction desdits protons par lesdits électrons au niveau de ladite face dorsale de ladite interface échangeuse de protons.

D'autres formes de réalisation du procédé suivant l'invention sont indiquées dans les revendications annexées.

L'invention a aussi pour objet une utilisation d'un dispositif photo-catalytique selon l'invention pour produire de l'hydrogène gazeux au départ d'une phase aqueuse et d'une source de lumière.

D'autres formes d'utilisation d'un dispositif photo-catalytique selon l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une vue schématique éclatée d'un dispositif photo-catalytique connu de l'état de la technique pour produire de l'hydrogène gazeux au départ d'une phase aqueuse et d'une source de lumière.
La figure 2 est une vue schématique éclatée d'un dispositif photo-catalytique selon l'invention pour produire de l'hydrogène gazeux au départ d'une phase aqueuse et d'une source de lumière.
La figure 3 illustre, au cours du temps et pour un dispositif tel qu'illustré à la figure 2 comprenant soit une interface échangeuse de protons dopée avec du platine (courbe en trait continu) soit une interface échangeuse de protons non dopée et une grille de platine (courbe en trait interrompu), la quantité de courant passant depuis l'anode vers la cathode lors de l'application, via le potentiostat, d'un potentiel énergétique additionnel (over-potential) d'une valeur de 0,6V.
La figure 4 est une vue schématique éclatée d'un autre dispositif photo-catalytique selon l'invention pour produire de l'hydrogène gazeux au départ d'une phase aqueuse et d'une source de lumière.
La figure 5 est un graphique comparant les résultats enregistrés au travers de mesures d'ampéro-multivoltage (de 0,1V à 0,9V) pour les dispositifs suivant l'invention illustrés aux figures 2 (trait interrompu) et 4 (trait continu) comprenant une interface échangeuse de protons dopée.
La figure 6 est une vue schématique éclatée d'un autre dispositif photo-catalytique selon l'invention pour produire de l'hydrogène gazeux au départ d'une phase aqueuse et d'une source de lumière.

Sur les figures, les éléments identiques ou analogues portent les mêmes références.

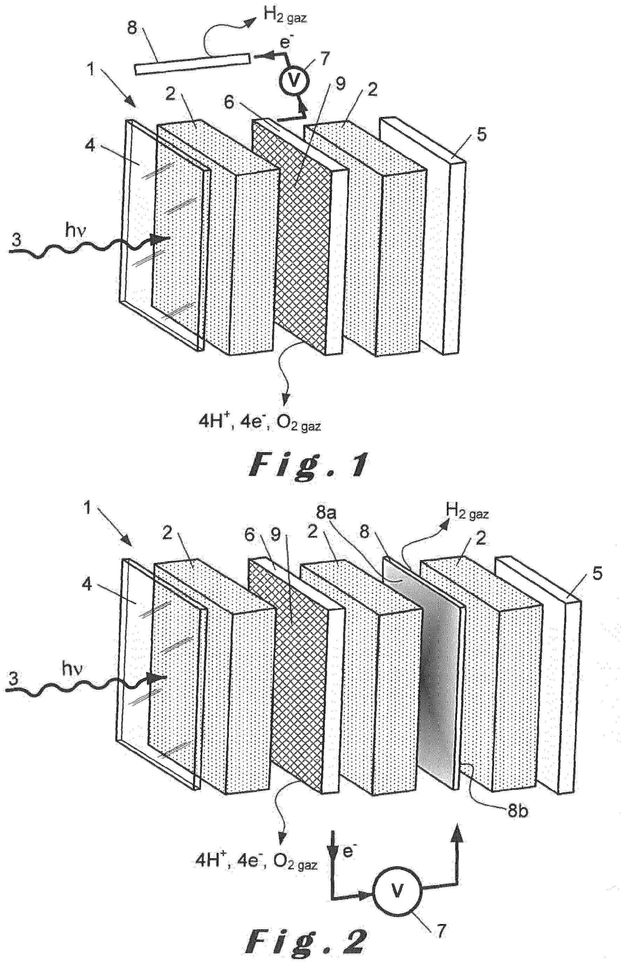

La figure 1 illustre un dispositif 1 de l'état de la technique pour produire de l'hydrogène gazeux (H_{2 gaz}) au départ d'une phase aqueuse 2 et d'une source de lumière 3. Ce dispositif 1 comprend une paroi frontale 4 permettant aux photons issus de la source de lumière 3 d'irradier un système photo-catalytique 9 en contact avec la phase aqueuse 2. Ce dispositif comprend également une paroi dorsale 5, par exemple une paroi dorsale 5 en un polymère adéquat. Bien entendu, le dispositif 1 comprend également des parois supérieure et inférieure et des parois latérales de telle façon à former, avec les parois frontale et dorsale, un dispositif (générateur) étanche. Par exemple, la paroi frontale 4 peut être en verre, étant entendu que tout matériau adéquat permettant aux photons issus de la source de lumière 3 d'irradier le système photo-catalytique 9 en contact avec la phase aqueuse 2 est couvert par la présente invention.

Dans la phase aqueuse 2 baigne une anode 6 (par exemple une anode 6 en carbone) comprenant des photo-enzymes de type PSII comme système photo-catalytique 9, reliée par l'intermédiaire d'un potentiostat 7 à une cathode 8 baignant également dans la même phase aqueuse 2. Un système photo-catalytique sous la forme de photo-enzymes 9 forme un revêtement de l'anode 6 et est disposé sur cette dernière de telle sorte que les photons puissent l'activer : sous l'action de la lumière (photons), les photo-enzymes 9 (par exemple le complexe moléculaire PSII) vont être le siège d'une réaction d'oxydation de la phase aqueuse 2 afin d'y produire de l'oxygène gazeux (O_{2 gaz}), des électrons (4 e⁻) et des protons libres (4 H⁺).

Préférentiellement, la phase aqueuse 2 comprend un médiateur de transport d'électrons (ou accepteur d'électrons) (par exemple de type DCBQ) prenant en charge ces derniers pour leur faire gagner l'anode 6 de telle sorte que, puisque cette dernière est connectée électriquement à la cathode 8 par l'intermédiaire d'un potentiostat 7, les électrons puissent gagner la cathode 8 et y rejoindre les protons, lesquels auront également gagné la cathode 8 au travers de la phase aqueuse 2. Se réalise alors, au niveau de la cathode 8, une réaction de réduction des protons H⁺ par les électrons e⁻ de telle sorte à former de l'hydrogène gazeux (H_{2 gaz}).

La figure 2 illustre un dispositif 1 selon l'invention pour produire de l'hydrogène gazeux (H_{2 gaz}) au départ d'une phase aqueuse 2 et d'une source de lumière 3, laquelle peut par exemple être une lumière LED rouge ou une lumière de type halogène. Ce dispositif 1 comprend une paroi frontale 4 permettant aux photons issus de la source de lumière 3 d'irradier un système photo-catalytique 9 en contact avec la phase aqueuse 2. Ce dispositif comprend également une paroi dorsale 5, par exemple une paroi dorsale 5 en un polymère adéquat. Bien entendu, le dispositif 1 comprend également des parois supérieure et inférieure et des parois latérales de telle façon à former, avec les parois frontale et dorsale, un dispositif (réacteur) étanche. Par exemple, la paroi frontale 4 peut être en verre, étant entendu que tout matériau adéquat permettant aux photons issus de la source de lumière 3 d'irradier le système photo-catalytique 9 en en contact avec la phase aqueuse 2 est couvert par la présente invention.

Dans la phase aqueuse 2 baigne une anode 6 (par exemple une anode 6 en carbone) comprenant des photo-enzymes (par exemple des photo-enzymes de type PSII) et reliée par l'intermédiaire d'un potentiostat 7 à une interface sous la forme d'une membrane 8 échangeuse de protons présentant une face frontale 8a orientée vers ledit moyen de capture d'électrons 6 et présentant une face dorsale 8b comprenant au moins un catalyseur et/ou au moins un système catalytique, la membrane (interface) 8 baignant également dans la même phase aqueuse 2. Un système photo-catalytique sous la forme de photo-enzymes 9 forme un revêtement de l'anode 6 et est disposé sur cette dernière de telle sorte que les photons puissent les activer : sous l'action de la lumière (photons), les photo-enzymes 9 (par exemple le complexe moléculaire PSII) vont être le siège d'une réaction d'oxydation de la phase aqueuse 2 afin d'y produire de l'oxygène gazeux (O_{2 gaz}), des électrons (4 e⁻) et des protons libres (4 H⁺). Plus particulièrement, la membrane (interface) 8 présente une face frontale 8a en contact avec la phase aqueuse 2 et présente également une face dorsale 8b également en contact avec la phase aqueuse 2 et étant dopée avec du platine de telle façon à pouvoir jouer le rôle de cathode. La réaction de réduction des protons (H⁺) par les électrons (e⁻) afin d'obtenir de l'hydrogène gazeux (H_{2 gaz}) s'effectue uniquement au niveau de la face dorsale 8b de la membrane (interface) 8.

Préférentiellement, la phase aqueuse 2 comprend un médiateur de transport d'électrons ou un accepteur d'électrons (par exemple de type DCBQ) prenant en charge ces derniers pour leur faire gagner l'anode 6 de telle sorte que, puisque cette dernière est connectée électriquement à la membrane (interface) 8 par l'intermédiaire d'un potentiostat 7, les électrons puissent gagner la membrane (interface) 8 et y rejoindre les protons, lesquels auront également gagné la membrane (interface) 8 au travers de la phase aqueuse 2. Se réalise alors, au niveau de la face dorsale de la membrane (interface) 8, une réaction de réduction des protons H⁺ par les électrons e⁻ de telle sorte à former de l'hydrogène gazeux (H_{2 gaz}). Eventuellement, un tissu en carbone (Gaz Diffusion Layer-GDL) est placé sur la face dorsale 8b (orientée vers la paroi 5) de la membrane (interface) 8 (dopée et jouant le rôle de cathode) pour former une couche de contact électrique entre la membrane (cathode) 8 et le potentiostat 7.

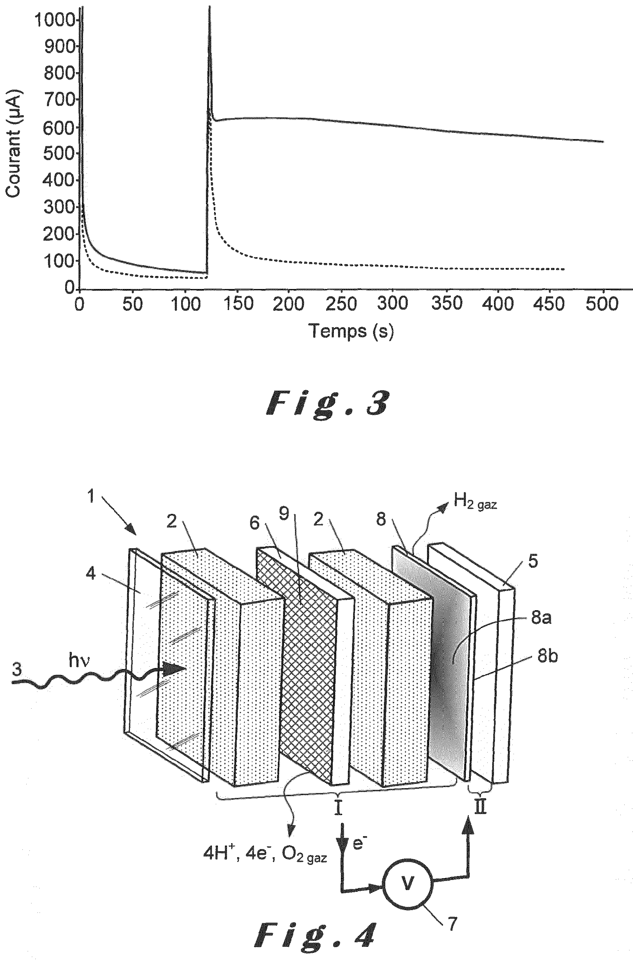

La figure 3 illustre au cours du temps et pour un dispositif tel qu'illustré à la figure 2 comprenant soit une interface échangeuse de protons dopée avec du platine selon l'invention (courbe en trait continu), soit une interface échangeuse de protons non dopée et une grille de platine selon l'état de la technique (courbe en trait interrompu), la quantité de courant passant depuis l'anode vers la cathode lors de l'application, via le potentiostat, d'un potentiel énergétique additionnel (over-potential) d'une valeur de 0,6V. Afin de réaliser ces essais expérimentaux, une lumière de type halogène émettant 600 µmoles de photons utiles au système photosynthétique/(s.m²) a été utilisée afin d'irradier la phase aqueuse 2 (une lumière de type LED rouge émettant 600 µmoles de photons utiles au système photosynthétique /(s.m²) a également été utilisée dans le cadre de ces essais comme source de lumière, ce qui a permis d'observer des résultats identiques). Par ailleurs, pour ces essais, la phase aqueuse 2 comprend du DCBQ (0,75 mM) en tant que médiateur de transport d'électrons et un tampon (NaCI 50 mM, MES 20 mM, MgCI 2mM), l'anode 6 est une anode en carbone comprenant des photo-enzymes 9 de type PSII (30 µg Chl/cm²).

Dès lors qu'il peut être considéré que l'intégrale sous chacune de ces courbes est proportionnelle à la quantité d'hydrogène gazeux produit (H_{2 gaz}), il ressort clairement des résultats obtenus que, pour un même potentiel énergétique additionnel (over-potential) de 0,6V appliqué au système, une quantité plus importante d'hydrogène gazeux produit (H_{2 gaz}) est produite lorsque le dispositif comprend une interface échangeuse de protons dopée jouant le rôle de cathode, ceci en comparaison avec un dispositif dans lequel sont présentes une interface échangeuse de protons non dopée et une grille de platine.

La figure 4 illustre un autre dispositif 1 photo-catalytique selon l'invention pour produire de l'hydrogène gazeux (H_{2 gaz}) au départ d'une phase aqueuse 2 et d'une source de lumière 3, laquelle peut par exemple être une lumière LED rouge ou une lumière de type halogène. Ce dispositif 1 selon l'invention comprend les mêmes éléments que ceux illustrés et décrits à la figure 2, mais ce dispositif 1 selon l'invention tel qu'illustré à la figure 4 présente une première zone I aqueuse et une deuxième zone II non aqueuse. Selon ce mode de réalisation, une interface sous la forme d'une membrane 8 de type PEM dopée avec du platine constitue une séparation entre la première zone I aqueuse et la deuxième zone II non aqueuse. Le dopage de la face dorsale de la membrane (interface) 8 avec du carbone et du platine permet à celle-ci de jouer le rôle de cathode. Cette séparation sous forme d'une membrane (interface) 8 ne laisse pas passer la phase aqueuse 2 ni les gaz mais laisse passer les protons (H⁺) depuis ladite zone I aqueuse vers ladite zone II non aqueuse. Plus particulièrement, cette membrane (séparation) présente une face frontale 8a en contact avec la phase aqueuse 2 et est orientée du côté de la première zone I aqueuse. Cette membrane (séparation) présente également une face dorsale 8b dopée avec du platine de telle façon à pouvoir jouer le rôle de cathode, cette face dorsale 8b étant orientée du côté de la deuxième zone II non aqueuse, la réaction de réduction des protons (H⁺) par les électrons (e⁻) afin d'obtenir de l'hydrogène gazeux (H_{2 gaz}) s'effectuant uniquement au niveau de la face dorsale 8b de la séparation (membrane) et donc uniquement du côté de la zone II non aqueuse. Eventuellement, un tissu en carbone (Gaz Diffusion Layer - GDL) est placé sur la face dorsale 8b (orientée vers la paroi 5) de la membrane (interface) 8 (dopée et jouant le rôle de cathode) pour former une couche de contact électrique entre la cathode 8 et le potentiostat 7.

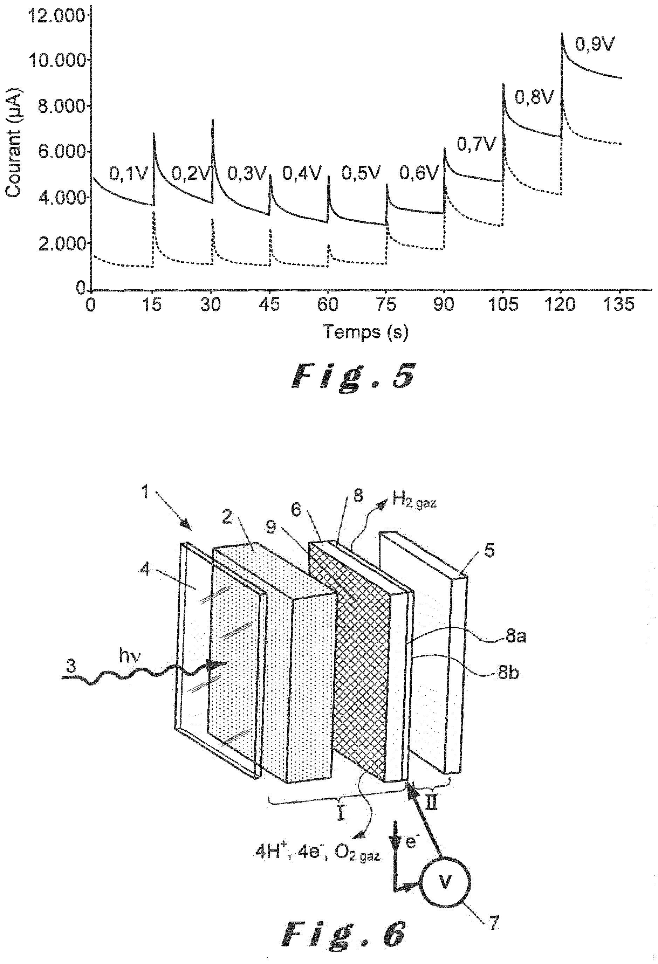

La figure 5 est un graphique comparant les résultats enregistrés au travers de mesures d'ampéro-multivoltage (de 0,1V à 0,9V) pour les dispositifs suivant l'invention illustrés aux figures 2 (trait interrompu) et 4 (trait continu). Pour chacun de ces modes de réalisation illustrés aux figures 2 ou 4, une interface échangeuse de protons (membrane PEM) dopée avec du platine (sur sa face dorsale) joue le rôle de cathode. Comme il ressort de ce graphique, l'intensité du courant (µA) est plus importante, pour un même potentiel appliqué au système, lorsque ce dernier comprend une interface échangeuse de protons dopée avec du platine et séparant une première zone aqueuse d'une deuxième zone non aqueuse (mode de réalisation de la figure 4). Sur ce graphique, ce mode de réalisation de la figure 4 est comparé à un dispositif selon la figure 2 où n'est pas présente cette zone non aqueuse. Il ressort de ceci que le mode de réalisation selon l'invention illustré à la figure 4 présentant une zone non aqueuse où a lieu la réaction de réduction des protons permet d'optimiser l'intensité de courant, ce qui implique une production d'H_{2 gaz} plus importante pour une application d'un potentiel énergétique identique et prédéterminé, en comparaison avec un dispositif selon l'invention ne comprenant pas de zone non aqueuse.

Afin de réaliser ces essais expérimentaux, une lumière de type halogène émettant 600 µmoles de photons utiles au système photosynthétique/(s.m²) a été utilisée afin d'irradier la phase aqueuse 2 (une lumière de type LED rouge émettant également 600 µmoles de photons utiles au système photosynthétique /(s.m²) a également été utilisée dans le cadre de ces essais comme source de lumière, ce qui a permis d'observer des résultats identiques). Par ailleurs, pour ces essais, la phase aqueuse 2 comprenant du DCBQ (0,75 mM) en tant que médiateur de transport d'électrons et un tampon (NaCI 50 mM, MES 20 mM, MgCI 2mM), l'anode 6 est une anode en carbone comprenant des photo-enzymes 9 de type PSII (30 µg Chl/cm²). En outre, pour le mode de réalisation illustré à la figure 4, était présent lors des essais, un dispositif additionnel de récupération et d'évacuation de gaz présents dans la zone non aqueuse.

La figure 6 est une vue schématique d'un autre dispositif photo-catalytique selon l'invention pour produire de l'hydrogène gazeux (H_{2 gaz}) au départ d'une phase aqueuse 2 et d'une source de lumière 3. Ce dispositif 1 est identique à celui illustré à la figure 4, à la différence que la membrane (interface) 8 est accolée à la face dorsale de l'anode 6. La membrane (interface) 8 constitue une séparation entre la première zone I aqueuse et la deuxième zone II non aqueuse et est dopée avec du carbone et du platine de telle façon à pouvoir jouer le rôle de cathode. Cette séparation sous forme d'une membrane (interface) 8 ne laisse pas passer la phase aqueuse 2 ni les gaz mais laisse passer les protons (H⁺). Plus particulièrement, cette membrane (interface) 8 présente une face frontale 8a en contact direct avec l'anode 6 (par accolement contre la face dorsale de l'anode 6), cette face frontale 8a étant orientée du côté de la première zone I aqueuse. Cette membrane (interface) 8 présente également une face dorsale 8b dopée avec du platine de telle façon à pouvoir jouer le rôle de cathode, cette face dorsale 8b étant orientée du côté de la deuxième zone II non aqueuse. La réaction de réduction des protons (H⁺) par les électrons (e⁻) afin d'obtenir de l'hydrogène gazeux (H_{2 gaz}) s'effectue uniquement dans cette zone II non aqueuse au niveau de la face dorsale 8b de la membrane 8. Eventuellement, un tissu en carbone (Gaz Diffusion Layer - GDL) est placé sur la face dorsale 8b (orientée vers la paroi 5) de la membrane (interface ou séparation) 8 (dopée et jouant le rôle de cathode) pour former une couche de contact électrique entre la cathode 8 et le potentiostat 7.

Selon ce mode de réalisation suivant l'invention illustré à la figure 6, la réaction de réduction s'effectue dans la zone II non aqueuse mais, en plus, les protons obtenus dans la phase aqueuse via la réaction d'oxydation sont directement pris en charge par la membrane (interface) 8 sans avoir à traverser une phase aqueuse comme c'est le cas pour le mode de réalisation selon l'invention illustré à la figure 4. Ici, les protons ne se retrouvent pas dans une phase aqueuse à nouveau : ils sont pris en charge directement par la membrane (interface) 8 qui joue le rôle de cathode 8 dans la zone II non aqueuse.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Dispositif photo-catalytique de dissociation d'une phase aqueuse pour produire de l'hydrogène gazeux, ledit dispositif étant agencé de sorte qu'au moins un système photo-catalytique en contact avec ladite phase aqueuse puisse être irradié par une source lumineuse pour produire, via une réaction d'oxydation de ladite phase aqueuse, au niveau d'un moyen de capture d'électrons, de l'oxygène gazeux, des électrons et des protons, ledit dispositif comprenant :
- une première zone comprenant ladite phase aqueuse, et
- un moyen de réduction desdits protons agencé pour réaliser une réaction de réduction desdits protons par lesdits électrons afin de produire de l'hydrogène gazeux,
ledit moyen de réduction de protons étant une interface échangeuse de protons présentant une face frontale orientée vers ledit moyen de capture d'électrons et une face dorsale, ladite face dorsale de ladite interface échangeuse de protons comprenant au moins un catalyseur et/ou au moins un système catalytique,
ledit dispositif étant **caractérisé en ce que** ladite interface échangeuse de protons constitue une séparation entre ladite première zone comprenant ladite phase aqueuse et une deuxième zone non aqueuse, ladite séparation étant une séparation ne laissant pas passer ladite phase aqueuse mais laissant passer les protons vers ladite deuxième zone non aqueuse.

2. Dispositif photo-catalytique de dissociation d'une phase aqueuse pour produire de l'hydrogène gazeux selon la revendication 1, **caractérisé en ce que** ledit système photo-catalytique est un système comprenant au moins une photo-enzyme et/ou ses coenzymes ou un système comprenant tout photo-catalyseur capable d'opérer une réaction d'oxydation d'une phase aqueuse.

3. Dispositif photo-catalytique de dissociation d'une phase aqueuse pour produire de l'hydrogène gazeux selon les revendications 1 ou 2, **caractérisé en ce que** ledit au moins un système photo-catalytique est au moins une photo-enzyme étant le complexe enzymatique PSII, de préférence le complexe enzymatique PSII isolé du complexe enzymatique PSI et/ou d'autres protéines thylakoïdiennes.

4. Dispositif photo-catalytique de dissociation d'une phase aqueuse pour produire de l'hydrogène gazeux selon l'une quelconque des revendications 1 à 3, **caractérisé en ce que** ledit au moins un système photo-catalytique en contact avec ladite phase aqueuse constitue le revêtement d'une première électrode, en particulier le revêtement d'une anode.

5. Dispositif photo-catalytique de dissociation d'une phase aqueuse pour produire de l'hydrogène gazeux selon l'une quelconque des revendications 1 à 4, **caractérisé en ce que** ledit moyen de capture d'électrons comprend ou non au moins un catalyseur et/ou au moins un système catalytique autre que ledit système photo-catalytique.

6. Dispositif photo-catalytique de dissociation d'une phase aqueuse pour produire de l'hydrogène gazeux selon la revendication 5, **caractérisé en ce que** ledit au moins un catalyseur et/ou ledit au moins un système catalytique autre que ledit système photocatalytique comprend des enzymes de type hydrogénase et/ou des particules de platine

7. Dispositif photo-catalytique de dissociation d'une phase aqueuse pour produire de l'hydrogène gazeux selon l'une quelconque des revendications 1 à 6, **caractérisé en ce que** ledit moyen de capture d'électrons est une interface échangeuse de protons ou une grille en carbone.

8. Dispositif photo-catalytique de dissociation d'une phase aqueuse pour produire de l'hydrogène gazeux selon l'une quelconque des revendications 1 à 7, **caractérisé en ce que** ladite séparation est une séparation ne laissant pas passer ladite phase aqueuse ni les gaz tout en laissant passer les protons.

9. Dispositif photo-catalytique de dissociation d'une phase aqueuse pour produire de l'hydrogène gazeux selon l'une quelconque des revendications 1 à 8, **caractérisé en ce qu'**un moyen de contact est présent au niveau dudit moyen de capture d'électrons et/ou au niveau dudit moyen de capture d'électrons.

10. Dispositif photo-catalytique de dissociation d'une phase aqueuse pour produire de l'hydrogène gazeux selon l'une quelconque des revendications 1 à 9, **caractérisé en ce que** ladite phase aqueuse est une phase contenant uniquement de l'eau ou une phase contenant de l'eau et au moins un additif, par exemple un électrolyte ou un médiateur de transport d'électrons ou un accepteur d'électrons.

11. Dispositif photo-catalytique de dissociation d'une phase aqueuse pour produire de l'hydrogène gazeux selon l'une quelconque des revendications 1 à 10, **caractérisé en ce que** ladite phase aqueuse comprend en outre un médiateur de transport d'électrons ou un accepteur d'électrons.

12. Dispositif photo-catalytique de dissociation d'une phase aqueuse pour produire de l'hydrogène gazeux selon l'une quelconque des revendications 1 à 11, **caractérisé en ce que** ladite source de lumière se trouve dans la phase aqueuse.

13. Procédé de production d'hydrogène gazeux avec un dispositif photo-catalytique selon l'une quelconque des revendications 1 à 12, ledit procédé comprenant les étapes suivantes :
- une irradiation d'au moins un système photo-catalytique en contact avec une phase aqueuse présente dans une première zone, par une source lumineuse, pour produire, via une réaction d'oxydation de ladite phase aqueuse au niveau d'un moyen de capture d'électrons, de l'oxygène gazeux, des électrons et des protons, et
- une capture desdits protons, au niveau d'une interface échangeuse de protons présentant une face frontale orientée vers ledit moyen de capture d'électrons et présentant une face dorsale comprenant au moins un catalyseur et/ou au moins un système catalytique, afin que lesdits protons soient réduits en hydrogène gazeux via une réaction de réduction desdits protons par lesdits électrons au niveau de ladite face dorsale de ladite interface échangeuse de protons.

14. Utilisation d'un dispositif photo-catalytique selon l'une quelconque des revendications 1 à 12 pour produire de l'hydrogène gazeux au départ d'une phase aqueuse et d'une source de lumière.

## Patentansprüche

1. Fotokatalytische Vorrichtung zur Dissoziation einer wässerigen Phase zum Produzieren von gasartigem Wasserstoff, wobei die genannte Vorrichtung derart angeordnet ist, dass wenigstens ein fotokatalytisches System mit der genannten wässerigen Phase durch eine Lichtquelle bestrahlt werden kann, um über eine Oxidationsreaktion der genannten wässerigen Phase an einem Elektronenerfassungsmittel gasartigen Sauerstoff aus den Elektronen und Proteinen zu produzieren, wobei die genannte Vorrichtung umfasst:
- einen ersten, die genannte wässerige Phase umfassenden Bereich, und
- ein Reduktionsmittel der genannten Protonen, das zum Realisieren einer Reduktionsreaktion der genannten Protonen durch die genannten Elektronen angeordnet ist, um gasartigen Wasserstoff zu produzieren,
wobei das genannte Protonen-Reduktionsmittel eine Protonenaustausch-Schnittstelle ist, die eine Vorderseite, die zu dem genannten Elektronenerfassungsmittel ausgerichtet ist, und eine Rückseite aufweist, wobei die genannte Rückseite der genannten Protonenaustausch-Schnittstelle wenigstens einen Katalysator und / oder wenigstens ein katalytisches System umfasst,
wobei die genannte Vorrichtung **dadurch gekennzeichnet ist, dass** die genannte Protonenaustausch-Schnittstelle eine Trennung zwischen dem genannten ersten Bereich, umfassend die genannte wässerige Phase, und einem zweiten, nicht wässerigen Bereich bildet, wobei die genannte Trennung eine Trennung ist, die die genannte wässerige Phase nicht durchlässt, sondern die Protonen zu dem genannten nicht wässerigen Bereich durchlässt.

2. Fotokatalytische Vorrichtung zur Dissoziation einer wässerigen Phase zum Produzieren von gasartigem Wasserstoff gemäß Anspruch 1, **dadurch gekennzeichnet, dass** das genannte fotokatalytische System ein System, umfassend wenigstens ein Fotoenzym und / oder dessen Koenzyme oder ein System ist, umfassend jeden Fotokatalysator, der geeignet ist, eine Oxidationsreaktion einer wässerigen Phase herbeizuführen.

3. Fotokatalytische Vorrichtung zur Dissoziation einer wässerigen Phase zum Produzieren von gasartigem Wasserstoff gemäß Anspruch 1 oder 2, **dadurch gekennzeichnet, dass** das wenigstens eine fotokatalytische System wenigstens ein Fotoenzym ist, das der enzymatische Komplex PSII, bevorzugt der enzymatische Komplex PSII, der vom enzymatischen Komplex PSI und / oder anderen Thylakoid-Proteinen isoliert ist, ist.

4. Fotokatalytische Vorrichtung zur Dissoziation einer wässerigen Phase zum Produzieren von gasartigem Wasserstoff gemäß irgendeinem der Ansprüche 1 bis 3, **dadurch gekennzeichnet, dass** das wenigstens eine fotokatalytische System, das mit der genannten wässerigen Phase in Kontakt ist, die Beschichtung einer ersten Elektrode, insbesondere die Beschichtung einer Anode, darstellt.

5. Fotokatalytische Vorrichtung zur Dissoziation einer wässerigen Phase zum Produzieren von gasartigem Wasserstoff gemäß irgendeinem der Ansprüche 1 bis 4, **dadurch gekennzeichnet, dass** das genannte Elektronenerfassungsmittel wenigstens einen Katalysator und / oder wenigstens ein katalytisches System umfasst oder nicht, das nicht das genannte fotokatalytische System ist.

6. Fotokatalytische Vorrichtung zur Dissoziation einer wässerigen Phase zum Produzieren von gasartigem Wasserstoff gemäß Anspruch 5, **dadurch gekennzeichnet, dass** der wenigstens eine Katalysator und / oder das genannte wenigstens eine katalytische System, das kein fotokatalytisches System ist, Enzyme vom Typ Hydrogenase und / oder Platinpartikel umfasst.

7. Fotokatalytische Vorrichtung zur Dissoziation einer wässerigen Phase zum Produzieren von gasartigem Wasserstoff gemäß irgendeinem der Ansprüche 1 bis 6, **dadurch gekennzeichnet, dass** das genannte Elektronenerfassungsmittel eine Protonenaustausch-Schnittstelle oder ein Gitter aus Kohlenstoff ist.

8. Fotokatalytische Vorrichtung zur Dissoziation einer wässerigen Phase zum Produzieren von gasartigem Wasserstoff gemäß irgendeinem der Ansprüche 1 bis 7, **dadurch gekennzeichnet, dass** die genannte Trennung eine Trennung ist, die weder die genannte wässerige Phase noch die Gase hindurchlässt, dabei aber die Protonen hindurchlässt.

9. Fotokatalytische Vorrichtung zur Dissoziation einer wässerigen Phase zum Produzieren von gasartigem Wasserstoff gemäß irgendeinem der Ansprüche 1 bis 8, **dadurch gekennzeichnet, dass** ein Kontaktmittel an dem genannten Elektronenerfassungsmittel und / oder an dem genannten Elektronenerfassungsmittel vorhanden ist.

10. Fotokatalytische Vorrichtung zur Dissoziation einer wässerigen Phase zum Produzieren von gasartigem Wasserstoff gemäß irgendeinem der Ansprüche 1 bis 9, **dadurch gekennzeichnet, dass** die genannte wässerige Phase eine Phase ist, die ausschließlich Wasser enthält, oder eine Phase, die Wasser und wenigstens einen Zusatz, z. B. ein Elektrolyt oder einen Elektronentransport-Mediator oder einen Elektronenakzeptor enthält.

11. Fotokatalytische Vorrichtung zur Dissoziation einer wässerigen Phase zum Produzieren von gasartigem Wasserstoff gemäß irgendeinem der Ansprüche 1 bis 10, **dadurch gekennzeichnet, dass** die genannte wässerige Phase darüber hinaus einen Elektronentransport-Mediator oder einen Elektronenakzeptor umfasst.

12. Fotokatalytische Vorrichtung zur Dissoziation einer wässerigen Phase zum Produzieren von gasartigem Wasserstoff gemäß irgendeinem der Ansprüche 1 bis 11, **dadurch gekennzeichnet, dass** die genannte Lichtquelle sich in der wässerigen Phase befindet.

13. Produktionsverfahren von gasartigem Wasserstoff mit einer fotokatalytischen Phase gemäß irgendeinem der Ansprüche 1 bis 12, wobei das genannte Verfahren die folgenden Schritte umfasst:
- eine Bestrahlung wenigstens eines fotokatalytischen Systems, das mit einer wässerigen Phase in Kontakt ist, die in einem ersten Bereich vorhanden ist, durch eine Lichtquelle, um über eine Oxidationsreaktion der genannten wässerigen Phase an einem Elektronenerfassungsmittel gasartigen Sauerstoff, aus den Elektronen und Protonen zu produzieren, und
- ein Erfassen der genannten Protonen an einer Protonenaustausch-Schnittstelle, die eine Vorderseite aufweist, die zu dem genannten Elektronenerfassungsmittel ausgerichtet ist und eine Rückseite aufweist, die wenigstens einen Katalysator und / oder wenigstens ein katalytisches System aufweist, damit die genannten Protonen über eine Reduktionsreaktion der genannten Protonen durch die genannten Elektronen an der genannten Rückseite der genannten Protonenaustausch-Schnittstelle in gasartigen Wasserstoff reduziert werden.

14. Verwendung einer fotokatalytischen Vorrichtung gemäß irgendeinem der Ansprüche 1 bis 12 zum Produzieren des gasartigen Wasserstoffs ausgehend von einer wässerigen Phase und einer Lichtquelle.

## Claims

1. A photocatalytic dissociation device of an aqueous phase for producing gaseous hydrogen, said device being arranged such that at least one photocatalytic system in contact with said aqueous phase can be irradiated by a light source for producing, through an oxidation reaction of said aqueous phase, at the level of a means for capturing electrons, gaseous oxygen, electrons and protons, said device comprising :
- a first zone comprising said aqueous phase, and
- a means for reducing said protons arranged to carry out a reaction for reducing said protons by said electrons in order to produce gaseous hydrogen,
said means for reducing protons is a proton exchange interface having a front side facing said means for capturing electrons and a back side, said back side of said proton exchange interface comprising at least one catalyst and/or at least one catalytic system, said device being **characterised in that** said proton exchange interface constitutes a separation between said first zone comprising said aqueous phase and a second non-aqueous zone, said separation is a separation that does not allow said aqueous phase to pass but allows the protons to pass to said second non-aqueous zone.

2. A photocatalytic dissociation device of an aqueous phase for producing gaseous hydrogen according to claim 1, **characterised in that** said photocatalytic system is a system comprising at least one photo-enzyme and/or its coenzymes or a system comprising any photocatalyst that can carry out an oxidation reaction of an aqueous phase.

3. The photocatalytic dissociation device of an aqueous phase for producing gaseous hydrogen according to claim 1 or 2, **characterised in that** said at least one photocatalytic system is at least one photo-enzyme being the PSII enzyme complex, preferably the PSII enzyme complex isolated from the PSI enzyme complex and/or other thylakoid proteins.

4. Photocatalytic dissociation device of an aqueous phase for producing gaseous hydrogen according to any one of the claims 1 to 3, **characterised in that** said at least one photocatalytic system in contact with said aqueous phase constitutes the coating of a first electrode, particularly the coating of an anode.

5. Photocatalytic dissociation device of an aqueous phase for producing gaseous hydrogen according to any one of the claims 1 to 4, **characterised in that** said means for capturing electrons comprises or does not comprise at least one catalyst and/or at least one catalytic system other than said photocatalytic system.

6. A photocatalytic dissociation device of an aqueous phase for producing gaseous hydrogen according to claim 5, **characterised in that** said at least one catalyst and/or said at least one catalytic system other than said photocatalytic system comprises hydrogenase type enzymes and/or platinum particles.

7. A photocatalytic dissociation device of an aqueous phase for producing gaseous hydrogen according to any one of the claims 1 to 6, **characterised in that** said means for capturing electrons is a proton exchange interface or a carbon grid.

8. The photocatalytic dissociation device of an aqueous phase for producing gaseous hydrogen according to any one of the claims 1 to 7, **characterised in that** said separation is a separation that does not allow said aqueous phase or the gases to pass while allowing the protons to pass.

9. The photocatalytic dissociation device of an aqueous phase for producing gaseous hydrogen according to any one of the claims 1 to 8, **characterised in that** a means of contact is present at said means for capturing electrons and/or at said means for capturing electrons.

10. Photocatalytic device for dissociating an aqueous phase for producing gaseous hydrogen according to any one of the claims 1 to 9, **characterised in that** said aqueous phase is a phase containing only water or a phase containing water and at least one additive, for example an electrolyte or an electron transport mediator or an electron acceptor.

11. Photocatalytic dissociation device of an aqueous phase for producing gaseous hydrogen according to any one of the claims 1 to 10, **characterised in that** said aqueous phase also comprises an electron transport mediator or an electron acceptor.

12. A photocatalytic dissociation device of an aqueous phase for producing gaseous hydrogen according to any one of the claims 1 to 11, **characterised in that** said light source is in the aqueous phase.

13. A process of producing gaseous hydrogen with a photocatalytic device according to any one of claims 1 to 12, said process comprising the following steps:
- irradiation of at least one photocatalytic system in contact with an aqueous phase present in a first zone, by a light source, for producing, through an oxidation reaction of said aqueous phase at the level of a means for capturing electrons, gaseous oxygen, electrons and protons, and
- a capturing of said protons, at the level of a proton exchange interface having a front side facing said means for capturing electrons and having a back side comprising at least one catalyst and/or at least one catalytic system, such that said protons are reduced to gaseous hydrogen through a reduction reaction of said protons by said electrons at the level of said back side of said proton exchange interface.

14. Use of a photocatalytic device according to any one of claims 1 to 12 for producing gaseous hydrogen from an aqueous phase and a light source.
